# EUROPÄISCHE PATENTSCHRIFT

(11) **EP 3 395 898 B1**
(45) Veröffentlichungstag und Bekanntmachung des Hinweises auf die Patenterteilung: **05.02.2020**
(21) Anmeldenummer: 17168589.4
(22) Anmeldetag: 28.04.2017
(51) Int. Cl.: C08L 69/00

(54) **POLYCARBONATZUSAMMENSETZUNG MIT PERLGLANZPIGMENT UND/ODER INTERFERENZPIGMENT**
POLYCARBONATE COMPOSITION WITH A PEARLESCENT PIGMENT AND/OR INTERFERENCE PIGMENT
COMPOSITION DE POLYCARBONATE COMPRENANT UN PIGMENT NACRÉ ET/OU UN PIGMENT D'INTERFÉRENCE

(43) Veröffentlichungstag der Anmeldung: 31.10.2018
(73) Patentinhaber: Covestro Deutschland AG, 51373 Leverkusen (DE)
(72) Erfinder: WANDNER, Derk, 51519 Odenthal (DE); HERMSDORFER, Ingmar, 47829 Krefeld (DE); SCHWIRWITZ, Christopher, 51375 Leverkussen (DE)
(74) Vertreter: Levpat

(56) Entgegenhaltungen:
- WO-A1-2013/045552
- DE-A1- 2 105 487

## Beschreibung

Die Erfindung betrifft Polycarbonat-Zusammensetzungen, enthaltend Interferenz- und/oder Perlglanzpigment aus der Gruppe der Metalloxid-beschichteten Glimmer, sowie Formteile aus diesen Zusammensetzungen.

Polycarbonatzusammensetzungen werden teilweise Effektpigmente zugegeben, um das Aussehen der Zusammensetzungen durch winkelabhängige Farbton- und/oder Glanzänderungen zu beeinflussen. Effektpigmente sind plättchenförmig und bewirken eine gerichtete Reflexion und/oder Interferenz. Es gibt verschiedene Gruppen von Effektpigmenten: Metalleffektpigmente, Interferenzpigmente und Perlglanzpigmente, wobei insbesondere die Grenzen zwischen letzteren fließend sein können und diese daher auch zusammenfassend als "spezielle Effektpigmente" bezeichnet werden.

Perlglanzpigmente umfassen transparente Plättchen mit hohem Brechungsindex. Durch Mehrfachreflektion entsteht ein perlenähnlicher Effekt. Die Farbgebung bei Interferenzpigmenten, die sowohl transparent als auch opak sein können, beruht vornehmlich auf Interferenz.

Zu den Perlglanz- und/oder Interferenzpigmenten zählen insbesondere auch Metalloxidbeschichtete Glimmerpigmente, die in verschiedenen Bereichen, etwa für Gehäuse zahlreicher Geräte im Haushalt oder der Unterhaltungselektronik oder als Designelement im Architekturbereich, Anwendung finden. Perlglanzeffekte und /oder Interferenzpigmente dieser Art sind unter Anderem unter den Namen "Magnapearl®" oder "Mearlin®" von der BASF SE oder unter den Namen "Iriodin®" oder "Candurin®" von der Merck SE erhältlich.

Bei Einsatz in Polycarbonat-Zusammensetzungen führen Perlglanzpigmente bzw. Interferenzpigmente aus der Gruppe der Metalloxid-beschichteten Glimmer üblicherweise zu einem signifikanten Abbau des Polycarbonates, was sich in einer Reduzierung des Molekulargewichtes und einer damit verbundenen Reduzierung der Viskosität und damit Erhöhung der Schmelzevolumenfließrate MVR und Verschlechterung der mechanischen Eigenschaften zeigt. Die Abbauprozesse führen außerdem zu einer Verfärbung des Materials.

Bei auf dem Markt befindlichen Zusammensetzungen werden die Abbauprozesse dadurch berücksichtigt, dass Polycarbonat mit höherem Molekulargewicht als für die eigentliche Anwendung benötigt eingesetzt wird. Das Ziel-Molekulargewicht wird dann durch die Compoundier- und Spritzguss- bzw. Extrusionsprozesse bei erhöhter Temperatur erreicht. Auch haben weitere Parameter im Compoundierprozess, wie die Steuerung des Energieeintrages oder die Anordnung der Dosierstelle für das Effektpigment, einen wesentlichen Einfluss auf das sich letztlich ergebende Molekulargewicht des Polycarbonats. Dabei zeigte sich jedoch, dass eine gezielte Steuerung des Molekulargewichts problematisch ist.

Eine grundsätzliche Möglichkeit, den Abbau von Polycarbonat zu minimieren, ist die Verwendung von Thermostabilisatoren. Zur Thermostabilisierung von Polycarbonat werden üblicherweise im Wesentlichen geeignete organische Phosphorverbindungen wie aromatische Phosphine, aromatische Phosphite und organische Antioxidantien, insbesondere sterisch gehinderten Phenole, zugesetzt. Häufig wird die Verwendung von Phosphiten in Kombination mit sterisch gehinderten Phenolen beschrieben, etwa in der EP 0 426 499 A1. Die Stabilisierung nur durch Phosphite ist jedoch im Fall der beschriebenen Effektpigmente nicht ausreichend. DE 21 05 487 A1 offenbart stabilisierten pigmentierten Polycarbonate, die gute mechanische Eigenschaften besitzen, die mit denen der unpigmentierten Polycarbonate vergleichbar sind. Auf Seite 1 wird ferner offenbart, dass der bei der Feuchtverarbeitung von pigmentiertem Polycarbonat beobachtete Molekulargewichtsabbau durch den beanspruchten Zusatzstoff vollständig aufgefangen wird. Als Zusatzstoff wird epoxidgruppenfreie Vinylhomo- oder copolymerisate auf Basis von Styrol, Methylmethacrylat, Äthylacrylate, Acrylnitril oder Acrylsäure, verwendet.

Aufgabe war es somit, Polycarbonat-Zusammensetzungen, enthaltend Perlglanz- und/oder Interferenzpigmente aus der Gruppe der Metalloxid-beschichteten Glimmer, bereitzustellen, die einen möglichst geringeren Abbau des Polycarbonates während der Compoundierung zeigen, so dass die vorstehend beschriebenen Nachteile möglichst vermieden werden.

Überraschend wurde gefunden, dass die Aufgabe durch Zusatz von Anhydrid-modifiziertem α-Olefin-Polymer (primärer Stabilisator), vorzugsweise in Kombination mit einem Phosphor-haltigen Thermostabilisator (sekundärer Stabilisator), insbesondere einer Thermostabilisator-Mischung, zu einer Polycarbonatzusammensetzung, enthaltend Perlglanz- und/oder Interferenzpigment(e) aus der Gruppe der Metalloxid-beschichteten Glimmer, gelöst wird.

Erfindungsgemäße Zusammensetzungen sind daher solche, enthaltend
A) 50 Gew.-% bis 98,5 Gew.-% aromatisches Polycarbonat und
B) 0,8 Gew.-% bis ≤ 3,0 Gew.-% Interferenzpigment und/oder Perlglanzpigment aus der Gruppe der Metalloxid-beschichteten Glimmer,
   dadurch gekennzeichnet, dass die Zusammensetzung außerdem
C) 0,05 Gew.-% bis ≤ 3 Gew.-% Anhydrid-modifiziertes α-Olefin-Polymer enthält, und vorzugsweise solche Zusammensetzungen, enthaltend außerdem 0,001 Gew.-% bis 0,500 Gew.-% eines oder mehrere Thermostabilisatoren.

### Komponente A

Bei Komponente A handelt es sich um aromatisches Polycarbonat. Unter "Polycarbonat" werden erfindungsgemäß sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Die thermoplastischen Polycarbonate einschließlich der thermoplastischen, aromatischen Polyestercarbonate haben mittlere Molekulargewichte M_{w}, bestimmt mittels Gelpermeationschromotographie nach DIN 55672-1:2007-08, kalibriert gegen Bisphenol A-Polycarbonat-Standards unter Verwendung von Dichlormethan als Elutionsmittel, von 10.000 g/mol bis 35.000 g/mol, vorzugsweise von 12.000 g/mol bis 32.000 g/mol, weiter bevorzugt von 15.000 g/ mol bis 32.000 g/mol, insbesondere von 20.000 g/mol bis 31.500 g/mol, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien, 1992, Seiten 117-299 verwiesen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten. Ebenso ist eine Herstellung über ein Schmelzepolymerisationsverfahren durch Umsetzung von Dihydroxyarylverbindungen mit beispielsweise Diphenylcarbonat möglich.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.
Bevorzugt steht Z in Formel (1) für einen Rest der Formel (2) 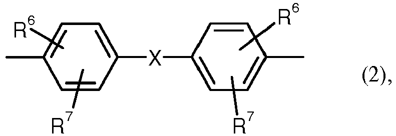 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis Cs-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

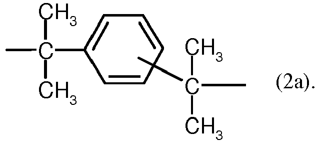

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 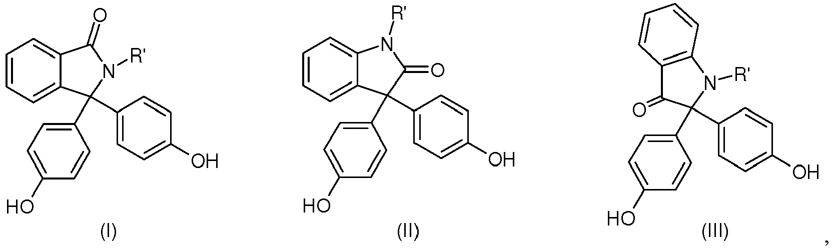 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Dihydroxyarylverbindungen sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A sowie die Diphenole der Formeln (I), (II) und (III).

Diese und weitere geeignete Dihydroxyarylverbindungen sind z.B. in US-A 3 028 635, US-A 2 999 825, US-A 3 148 172, US-A 2 991273, US-A 3 271367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur eine Dihydroxyarylverbindung eingesetzt, im Fall der Copolycarbonate werden mehrere Dihydroxyarylverbindungen eingesetzt. Die verwendeten Dihydroxyarylverbindungen, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol. Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan, sowie von den Diphenolen der Formeln (I), (II) und/oder (III) 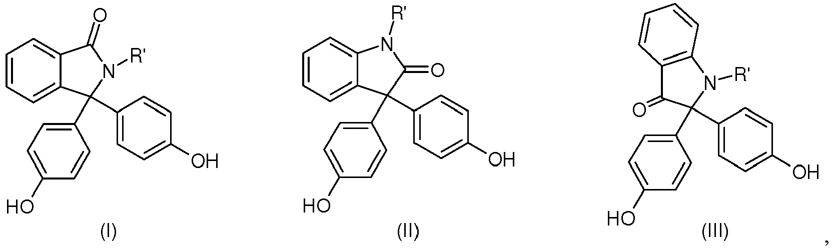 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A.

Zur Einarbeitung von Additiven wird die Komponente A bevorzugt wenigstens teilweise in Form von Pulvern, Granulaten oder Gemischen aus Pulvern und Granulaten eingesetzt.

Das Polycarbonat weist bevorzugt eine MVR von 5 bis 20 cm³/(10 min), weiter bevorzugt von 5,5 bis 12 cm³/(10 min), bestimmt nach ISO 1133:2012-03 bei einer Prüftemperatur von 300 °C und 1,2 kg Belastung, auf.

Als Polycarbonat kann auch eine Mischung aus verschiedenen Polycarbonaten eingesetzt werden, z.B. aus den Polycarbonaten A1 und A2:
Die Menge des aromatischen Polycarbonats A1 beträgt bevorzugt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis von Bisphenol A mit einer bevorzugten Schmelze-Volumenfließrate MVR von 5 bis 15 cm³/10 min, weiter bevorzugt mit einer Schmelze-Volumenfließrate MVR von 6 bis 12 cm³/10 min, bestimmt gemäß ISO 1133 (Prüftemperatur 300°C, Masse 1,2 kg, DIN EN ISO 1133-1:2012-03), ist.

Die Menge des pulverförmigen aromatischen Polycarbonats A2 beträgt bevorzugt, bezogen auf die Gesamtmenge an Polycarbonat, 2,0 bis 12,0 Gew.-%, bevorzugt 3,0 bis 11,0 Gew.-%, besonders bevorzugt 4,0 bis 10,0 Gew.-%, ganz besonders bevorzugt von 5,0 bis 8,0 Gew.-%, wobei dieses aromatische Polycarbonat bevorzugt auf Basis von Bisphenol A mit einer bevorzugten Schmelze-Volumenfließrate MVR von 12 bis 65 cm³/10 min, weiter bevorzugt mit einer Schmelze-Volumenfließrate MVR von 14 bis 32 cm³/10 min, und besonders bevorzugt mit einer Schmelze-Volumenfließrate MVR von 15 bis 20 cm³/10 min ist.

Insgesamt werden in erfindungsgemäßen Zusammensetzungen 50 bis 98,5 Gew.-%, bevorzugt 80 bis 98,0 Gew.-%, weiter bevorzugt 85 bis 97,5 Gew.-%, besonders bevorzugt 90,0 bis 97,5 Gew.-%, ganz besonders bevorzugt 93,0 Gew.-% bis 97,5 Gew.-%, aromatisches Polycarbonat eingesetzt.

### Komponente B

Bei Komponente B der erfindungsgemäßen Zusammensetzungen handelt es sich um Interferenzpigmente und/oder Perlglanzpigmente aus der Gruppe der Metalloxid-beschichteten Glimmer. Der Glimmer kann natürlich vorkommender oder synthetisch hergestellter Glimmer sein, wobei letzterer aufgrund der üblicherweise höheren Reinheit bevorzugt ist. Glimmer, der aus der Natur gewonnen wird, ist üblicherweise von weiteren Mineralien begleitet. Der Glimmer ist vorzugsweise Muskovit-basiert, d.h. er umfasst bevorzugt mindestens 60 Gew.-%, weiter bevorzugt mindestens 70 Gew.-%, noch weiter bevorzugt mindestens 85 Gew.-%, besonders bevorzugt mindestens 90

Gew. % Muskovit, bezogen auf das Gesamtgewicht des Glimmeranteils - ohne Metalloxid-Beschichtung - des Interferenz- und/oder Perlglanzpigmentes.

Die Metalloxid-Beschichtung umfasst vorzugsweise eine oder mehrere Beschichtungsschichten, enthaltend Titandioxid, Zinnoxid, Aluminiumoxid und/oder Eisenoxid, wobei das Metalloxid weiter bevorzugt Eisen(III)-oxid (Fe₂O₃), Eisen(II, III)-oxid (Fe₃O₄, eine Mischung aus Fe₂O₃ und FeO) und/oder Titandioxid ist, besonders bevorzugt Titandioxid. Die Metalloxid-Beschichtung ist somit ganz besonders bevorzugt eine Titandioxid-Beschichtung.

Der Anteil des Titandioxids am Gesamtgewicht des Pigments beträgt vorzugsweise 30 bis 60 Gew.-%, noch weiter bevorzugt 35 bis 55 Gew.-% und der Anteil des Glimmers vorzugsweise 40 bis 70 Gew.-%, noch weiter bevorzugt 45 bis 65 Gew.-%.

Als Titandioxid sind Rutil und/oder Anatas bevorzugt. Besonders bevorzugt umfasst das Pigment Anatas-beschichteten Glimmer, ganz besonders bevorzugt sind mindestens 90 Gew.-%, bevorzugt 95 Gew.-%, weiter bevorzugt mindestens 98 Gew.-%, der Pigmentkomponente B Anatas-beschichteter Glimmer.

Um die Verträglichkeit mit der Polymermatrix aus Polycarbonat zu erhöhen, ist das Pigment vorzugsweise zusätzlich mit einer Silikat-Beschichtung versehen, insbesondere einer Sol-Gel-Beschichtung. Dabei wird unter Silikat-Beschichtung erfindungsgemäß insbesondere auch eine Beschichtung aus Siliciumdioxid verstanden. Hierdurch wird üblicherweise gleichzeitig die Wetter- und Chemikalienbeständigkeit des Pigmentes erhöht.

Die mittlere Partikelgröße (D50) des Pigments, bestimmt mittels Laserdiffraktometrie an einer wässrigen Aufschlämmung des Pigments, beträgt bevorzugt zwischen 1 und 100 µm, bei synthetischem Glimmer weiter bevorzugt zwischen 5 bis 80 µm und bei natürlichem Glimmer weiter bevorzugt zwischen 3 und 30 µm, generell bei Glimmer besonders bevorzugt zwischen 3,5 bis 15 µm, ganz besonders bevorzugt 4,0 bis 10 µm, äußerst bevorzugt 4,5 bis 8,0 µm. Der D90-Wert, ebenfalls bestimmt mittels Laserdiffraktometrie an einer wässrigen Aufschlämmung des Pigments, beträgt bei synthetischem Glimmer vorzugsweise von 10 bis 150 µm und bei natürlichem Glimmer vorzugsweise von 5 bis 80 µm. Die Dichte des Pigments beträgt vorzugsweise 2,5 bis 5,0 g/cm³, weiter bevorzugt 2,8 bis 4,0 g/cm³, bestimmt nach DIN EN ISO 1183-1:2013-04.

Der Anteil des mindestens einen Metalloxid-beschichteten Glimmers an der gesamten auf Polycarbonat-basierenden Zusammensetzung beträgt 0,8 Gew.-% bis ≤ 3,0 Gew.-%, bevorzugt 1,0 Gew.-% bis 2,5 Gew.-%, besonders bevorzugt 1,2 Gew.-% bis 2,0 Gew.-%.

### Komponente C

Komponente C der erfindungsgemäßen Zusammensetzungen ist ein Anhydrid-modifiziertes α-Olefin-Polymer.

Das α-Olefin-Polymer basiert vorzugsweise auf mindestens einem Monomer, ausgewählt aus der Gruppe, bestehend aus Ethylen, 1-Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen, kann aber auch auf Gemischen aus diesen Monomeren basieren. Weiter bevorzugt basiert das α-Olefin-Polymer auf mindestens einem Monomer, ausgewählt aus der Gruppe, bestehend aus Ethen, Propen, 1-Hexen, 1-Octen. Besonders bevorzugt basiert das α-Olefin-Polymer auf Ethylen, Propen und/oder 1-Octen.

"Basierend auf" bedeutet in diesem Zusammenhang, dass bevorzugt mindestens 90 Gew.-%, weiter bevorzugt mindestens 95 Gew.-%, besonders bevorzugt mindestens 98 Gew.-%, bezogen auf das Gesamtgewicht des jeweiligen α-Olefin-Polymers in der Polycarbonat-haltigen Zusammensetzung, des α-Olefin-Polymers aus dem bzw. den jeweiligen Monomer/Monomeren gebildet sind.

Das α-Olefin-Polymer ist mit einem Anhydrid modifiziert, wobei zur Modifizierung ein ungesättigtes Carbonsäureanhydrid verwendet wird. Das Carbonsäureanhydrid ist vorzugsweise ausgewählt aus der Gruppe, bestehend aus Maleinsäureanhydrid, Phthalsäureanhydrid, Fumarsäureanhydrid, Itaconsäureanhydrid und deren Mischungen. Besonders bevorzugt ist Maleinsäureanhydrid.

Das Anhydrid-modifizierte α-Olefin-Polymer ist bevorzugt frei von Styrol-Butadien-Kautschuk, ganz besonders bevorzugt kautschukfrei.

Weiter bevorzugt umfasst Komponente C
Cl) 90,0-99,5 Gew.-%, vorzugsweise 92,0-97,5 Gew.-%, weiter bevorzugt 94,0-97,0 Gew.-% α -Olefin-Polymer und
C2) 0,5-10,0 Gew.-%, weiter bevorzugt 2,5-8,0 Gew.-%, noch weiter bevorzugt 3,0-6,0 Gew.-% Anhydrid.

Der olefinische Teil C1) des α-Olefin-Polymers ist ganz besonders bevorzugt dadurch gekennzeichnet, dass
der Ethylen-Anteil 65,0-96,0 Gew.-%, weiter bevorzugt 80,0-96,0 Gew.-%, ganz besonders bevorzugt 84,0-92,0 Gew.-%,
der Propylen-Anteil 2,0-10,0 Gew.-%, ganz besonders bevorzugt 4,0-8,0 Gew.-% und
der 1-Octen-Anteil 2,0-25,0 Gew.-%, weiter bevorzugt 2,0-10,0 Gew.-%, ganz besonders bevorzugt 4,0-8,0 Gew.-%, beträgt.

Ganz besonders bevorzugt basiert das α-Olefin-Polymer auf keinen weiteren Monomeren.

In einer erfindungsgemäßen, aber gegenüber einer Kombination aus Ethen, Propen und 1-Octen weniger bevorzugten Ausführungsform basiert der olefinische Teil C1) des alpha-Olefin-Polymers auf Propylen und/oder Ethylen, in einer anderen Ausführungsform nur auf Propylen, ganz besonders bevorzugt zu mindestens 98 Gew.-%.

Das mittlere Molekulargewicht M_{w} des Anhydrid-modifizierten α-Olefin-Polymers beträgt bevorzugt 300 bis 40000 g/mol, weiter bevorzugt 800 bis 32000 g/mol, noch weiter bevorzugt 1000 bis 15000 g/mol, besonders bevorzugt 1000 bis 8000 g/mol, ganz besonders bevorzugt 3000 bis 6000 g/mol. Das Molekulargewicht M_{w} wird bestimmt mittels Gelpermeationschromatographie in ortho-Dichlorbenzol bei 150 °C mit Polystyrolkalibrierung. Hierbei ist der angegebene Wert bevorzugt der Mittelwert aus einer Doppelbestimmung.

Die Säurezahl des Anhydrid-modifizierten α-Olefin-Polymers beträgt vorzugsweise mindestens 30 mg KOH/g, weiter bevorzugt 45 bis 170 mg KOH/g, besonders bevorzugt bis 79 mg KOH/g, bestimmt gemäß DIN ISO 17025:2005-08 mittels potentiometrischer Titration mit alkoholischer Kaliumhydroxid-Lösung.

Ganz besonders bevorzugt basiert das Anhydrid-modifizierte α-Olefin-Polymer gemäß Komponente C auf Ethen, Propen und 1-Octen, ist Maleinsäureanhydrid-modifiziert und weist weiter bevorzugt ein mittleres Molekulargewicht M_{w}, bestimmt mittels Gelpermeationschromatographie in ortho-Dichlorbenzol bei 150 °C mit Polystyrolkalibrierung, von 1000 bis 8000 g/mol, noch weiter bevorzugt 3000 bis 6000 g/mol, und eine Säurezahl von 45 bis 170 mg KOH/g, bestimmt gemäß DIN ISO 17025:2005-08 mittels potentiometrischer Titration, auf.

Die Menge an Anhydrid-modifiziertem α-Olefin-Polymer in der Gesamtzusammensetzung beträgt 0,05 Gew.-% bis ≤ 3 Gew.-%, bevorzugt 0,1 Gew.-% bis 2,0 Gew.-%, weiter bevorzugt 0,15 Gew.-% bis 1,5 Gew.-%, besonders bevorzugt 0,2 Gew.-% bis ≤ 1 Gew.-%.

### Komponente D

Die erfindungsgemäßen Zusammensetzungen enthalten bevorzugt mindestens einen Phosphor-haltigen Thermostabilisator, weiter bevorzugt einen Phosphin- und/oder Phosphit-haltigen Thermostabilisator. "Phosphor-haltig" bedeutet hierbei, dass Phosphor nicht in irgendeiner Form als bloße Verunreinigung in Komponente D enthalten ist, sondern dass die Strukturformel des Thermostabilisators ein Phosphor-Atom umfasst.

Bevorzugte erfindungsgemäße Zusammensetzungen enthalten mindestens einen Stabilisator auf Phosphinbasis, mindestens einen Stabilisator auf Phosphitbasis und mindestens einen Stabilisator aus der Gruppe der phenolischen Antioxidantien, welche eine besonders gute Stabilisatorkombination darstellen.

Alternativ bevorzugte erfindungsgemäße Zusammensetzungen enthalten mindestens einen Stabilisator auf Phosphinbasis, mindestens einen Stabilisator auf Phosphonitbasis, insbesondere auf Diphosphonitbasis, und mindestens einen Stabilisator aus der Gruppe der phenolischen Antioxidantien.

Die erfindungsgemäßen Zusammensetzungen enthalten vorzugsweise 0,001 bis 0,500 Gew.-%, bevorzugt 0,05 Gew.-% bis 0,270 Gew.-% eines oder mehrerer Phosphor-haltiger Thermostabilisatoren.

Phosphine im Sinne der vorliegenden Erfindung leiten sich von Verbindungen des allgemeinen Typs PₙHₙ₊₂, insbesondere von PH₃ ab, wobei bevorzugt alle Wasserstoffatome gegen aliphatische und/oder aromatische Kohlenwasserstoffreste ersetzt sind, wobei die aromatischen Kohlenwasserstoffreste weitere Substituenten wie zum Beispiel Alkylgruppen, verzweigt und/oder unverzweigt, aufweisen können. Die Phosphine können hierbei ein Phosphor-Atom aufweisen oder aber mehrere, über entsprechende aliphatische und/oder aromatische Kohlenwasserstoffe verbrückte Phosphor-Atome.

Unter Phosphiten im Sinne der vorliegenden Erfindung werden Ester der Phosphonsäure (oft auch als Phosphorigsäureester bezeichnet) mit der allgemeinen Struktur P(OR)₃ verstanden, wobei R für aliphatische und/oder aromatische Kohlenwasserstoffreste steht, wobei die aromatischen Kohlenwasserstoffreste weitere Substituenten wie zum Beispiel Alkylgruppen, verzweigt und/oder unverzweigt, aufweisen können.

Unter Phosphonaten werden von der Grundstruktur R-PO(OH)₂ abgeleitete Verbindungen verstanden, wobei R für aliphatische und/oder aromatische Kohlenwasserstoffreste steht, wobei die aromatischen Kohlenwasserstoffreste weitere Substituenten wie zum Beispiel verzweigte und/oder unverzweigte Alkylgruppen aufweisen können. Die OH-Gruppen der Grundstruktur können teilweise oder vollständig zu OR-Funktionalitäten, wobei R wiederum für aliphatische und/oder aromatische Kohlenwasserstoffreste steht, wobei die aromatischen Kohlenwasserstoffreste weitere Substituenten wie zum Beispiel Alkylgruppen, verzweigt und/oder unverzweigt, aufweisen können, verestert oder teilweise oder vollständig deprotoniert sein, wobei die negative Gesamtladung durch ein entsprechendes Gegenion ausgeglichen wird.

Unter Phosphoniten im Sinne der vorliegenden Erfindung werden Ester, insbesondere Diester der phosphonigen Säure vom Typ R-P(OR)₂ verstanden, wobei R für aliphatische und/oder aromatisehe Kohlenwasserstoffreste steht, wobei die aromatischen Kohlenwasserstoffreste weitere Substituenten wie zum Beispiel Alkylgruppen, verzweigt und/oder unverzweigt, aufweisen können. Die Phosphonite können hierbei ein Phosphor-Atom aufweisen oder aber mehrere, über entsprechende aliphatische und/oder aromatische Kohlenwasserstoffe verbrückte Phosphor-Atome.

Die Reste R in einer Verbindung können jeweils gleich oder verschieden sein.

Hinsichtlich der Auswahl der Phosphine liegen keine Beschränkungen vor, wobei die Phosphinverbindungen bevorzugt aus der Gruppe ausgewählt sind, die aliphatische Phosphine, aromatische Phosphine und aliphatisch-aromatische Phosphine umfasst.

Die Phosphinverbindungen können primäre, sekundäre und tertiäre Phosphine sein. Bevorzugt werden tertiäre Phosphine eingesetzt, wobei aromatische Phosphine besonders bevorzugt und tertiäre aromatische Phosphine ganz besonders bevorzugt sind.

Bevorzugt werden Triphenylphosphin (TPP), Trialkylphenylphosphin, Bisdiphenylphosphinoethan oder ein Trinaphthylphosphin, wovon Triphenylphosphin (TPP) ganz besonders bevorzugt ist, oder Mischungen dieser Phosphine eingesetzt.

Grundsätzlich können Mischungen aus verschiedenen Phosphinen eingesetzt werden.

Die Herstellung und Eigenschaften von Phosphinverbindungen sind dem Fachmann bekannt und beispielsweise in der EP 0 718 354 A2 und "Ullmanns Enzyklopädie der Technischen Chemie", 4. Aufl., Bd. 18, S. 378-398 und Kirk-Othmer, 3. Aufl., Bd. 17, S. 527-534 beschrieben.

Bei der Einsatzmenge der Phosphinverbindung in der Stabilisatormischung ist zu berücksichtigen, dass unter bestimmten Verarbeitungsbedingungen in Abhängigkeit von Temperatur und Verweilzeit die Substanz oxidiert werden kann. Der oxidierte Anteil steht nicht mehr zur Stabilisierung zur Verfügung. Deshalb sind die Zahl der Verarbeitungsschritte und die jeweiligen Prozessbedingungen zu berücksichtigen. Die Zusammensetzung enthält also nach thermischer Verarbeitung auch immer bestimmte Mengen an oxidiertem Phosphin, insbesondere bevorzugt Triphenylphosphinoxid.

Bevorzugt liegt die Menge an Phosphinstabilisator im Endprodukt bei >0,01 Gew.-%, weiter bevorzugt bei > 0,02 Gew.-%.

Bevorzugt werden den erfindungsgemäßen Zusammensetzungen 0,03 bis 0,500 Gew.-%, weiter bevorzugt 0,04 bis 0,07 Gew.-% Phosphin zugesetzt.

Erhältliche, im Rahmen der vorliegenden Erfindung geeignete Phosphitstabilisatoren sind beispielsweise Irgafos® 168 (Tris(2,4-di-tert-butyl-phenyl)-phosphit / CAS-Nr. 31570-04-4), Irgafos® TPP (CAS-Nr. 101-02-0), ADK PEP Stab 36 (CAS-Nr. 80693-00-1) und Irgafos® TNPP (CAS-Nr. 26523-78-4), wobei Irgafos® 168 besonders bevorzugt ist.

Zur Gruppe der Antioxidantien zählen insbesondere die sterisch gehinderten Phenole. Mögliche sterisch gehinderte Phenole sind zum Beispiel Ester n-Octadecyl-3-(3,5-di-t.butyl-4-hydroxyphenyl)-propionat oder β-(5-tert.-Butyl-4-hydroxy-3-methylphenyl)propionsäure oder β-(3,5-Dicyclohexyl-4-hydroxyphenyl)propionsäure mit ein- oder mehrwertigen Alkoholen, z. B. mit Methanol, Ethanol, Butanol, n-Octanol, i-Octanol, n-Octadecanol. 1,6-Hexandiol, 1,9-Nonandiol, Ethylenglycol, 1,2-Propandiol, Neopentylglycol, Diethylenglycol, Triethylenglycol, Tris-(hydroxyethyl)isocyanurat, N,N'-Bis(Hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

Besonders geeignet wird als sterisch gehindertes Phenol n-Octadecyl-3-(3,5-di-t.butyl-4-hydroxyphenyl)-propionat verwendet. Das sterisch gehinderte Phenol wird bevorzugt in Mengen von 0,01 bis 0,1 Gew.-%, bevorzugt 0,015 bis 0,06 Gew.-%, bezogen auf das Gesamtgewicht der Zusammensetzung, eingesetzt.

Kommerziell erhältliche geeignete phenolische Antioxidantien sind beispielsweise Irganox® 1076 (CAS-Nr. 2082-79-3 / 2,6-Di-tert-butyl-4-(octadecanoxycarbonylethyl)phenol) und Irganox® 1010 (CAS-Nr. 6683-19-8).

Die Stabilisatorkombination enthält vorzugsweise
a) 10 Gew.-% - 89 Gew.-%, weiter bevorzugt 20 Gew.-% - 78 Gew.-%, und besonders bevorzugt 30 Gew.-% - 67 Gew.-% mindestens eines Phosphinstabilisators,
b) 10 Gew.-% - 89 Gew.-%, weiter bevorzugt 20 Gew.-% - 78 Gew.-%, und besonders bevorzugt 30 Gew.-% - 67 Gew.-% mindestens eines Phosphitstabilisators, und
c) 1 Gew.-% - 50 Gew.-%, weiter bevorzugt 2 Gew.-% - 40 Gew.-%, und besonders bevorzugt 3 Gew.-% -20 Gew.-% mindestens eines phenolischen Antioxidans,
wobei sich die Summe der Komponenten a)-c) zu 100 Gew.-% addiert.

In einer besonders bevorzugten Ausführungsform besteht die Stabilisatorkombination aus Triphenylphosphin, Irganox 1076® und Bis(2,6-di-t.butyl-4-methylphenyl)pentaerythrityldiphosphit oder aus Triphenylphosphin, Irganox 1076® und aus Hostanox® P-EPQ®, welches ein Diphosphonit als Hauptkomponente umfasst.

Alternativ zu Irganox 1076® kann Irganox® 1010 (Pentaerythrit- 3-(4-hydroxy-3,5-di-tert-butylphenyl)propionat; CAS-Nr.: 6683-19-8) verwendet werden.

Der Anteil der Stabilisatorkombination an der Gesamtzusammensetzung ist 0,001 Gew.-% - 0,500 Gew.-%, vorzugsweise 0,005 Gew.-% - 0,300 Gew.%, weiter bevorzugt 0,05 bis 0,270 Gew.-%, besonders bevorzugt 0,15 Gew.% - 0,25 Gew.%, bezogen auf das Gesamtgewicht der Zusammensetzung.

In einer bevorzugten Ausführungsform beträgt das Verhältnis von Phosphit-Stabilisator zu phenolischem Antioxidans von 1: 5 bis 10:1, weiter bevorzugt von 1:5 bis 5:1 und besonders bevorzugt 4:1.

In einer weiteren bevorzugten Ausführungsform beträgt das Verhältnis von Phosphin (a) zum Gemisch aus Phosphit und phenolischen Antioxidans (b+c) bevorzugt 8: 1 bis 1 : 9, weiter bevorzugt 1:5 bis 5:1 wobei das Verhältnis von Phosphit-Stabilisator (b) zu phenolischem Antioxidans (c) von 1: 5 bis 10:1, weiter bevorzugt von 1:5 bis 5:1 und besonders bevorzugt 4:1 beträgt.

Um die thermoplastische Matrix zu stabilisieren, können weitere Phosphor-basierte Stabilisatoren eingesetzt werden, solange diese den Effekt der oben beschriebenen Stabilisierung nicht negativ beeinflussen.

### Komponente E

Den Zusammensetzungen, enthaltend aromatisches Polycarbonat, können als weitere Additive noch ein oder mehrere der für Polycarbonat-Zusammensetzungen üblichen Additive wie Flammschutzmittel, Antitropfmittel, Schlagzähmodifikatoren, Füllstoffe, Antistatika, Farbmittel, von Komponente B verschiedene Pigmente, auch umfassend Ruß, von Komponente D verschiedene Thermostabilisatoren, Gleit- und/oder Entformungsmittel, UV-Absorber, IR-Absorber, Hydrolysestabilisatoren und/oder Verträglichkeitsvermittler zugesetzt werden. Die Gruppe der weiteren Additive umfasst keine Pigmente gemäß Komponente B, d.h. keine Perlglanz- und/oder Interferenzpigmente aus der Gruppe der Metalloxid-beschichteten Glimmer, und keine Anhydrid-modifizierten α-Olefin-Polymere, da diese als Komponente C bezeichnet sind. Außerdem umfasst die Gruppe der weiteren Additive gemäß Komponente E keine Phosphor-haltigen Thermostabilisatoren, da diese bereits durch die ggf. vorhandene Komponente D erfasst sind.

Die Menge an weiteren Additiven beträgt bevorzugt bis zu 10 Gew.-%, weiter bevorzugt bis zu 5 Gew.-%, besonders bevorzugt 0,01 bis 3 Gew.-%, ganz besonders bevorzugt bis zu 1 Gew.-%, bezogen auf die Gesamtzusammensetzung.

Besonders geeignete Entformungsmittel für die erfindungsgemäßen Zusammensetzungen sind Pentaerythrittetrastearat (PETS) oder Glycerinmonostearat (GMS), deren Carbonate und/oder Mischungen dieser Entformungsmittel.

Farbmittel oder Pigmente im Sinne der vorliegenden Erfindung gemäß Komponente E sind beispielsweise Schwefel-haltige Pigmente wie Cadmium Red und Cadmium Gelb, Eisencyanidbasierte Pigmente wie Berliner Blau, Oxid-Pigmente wie Titandioxid, Zinkoxid, rotes Eisenoxid, schwarzes Eisenoxid, Chromoxid, Titangelb, Zink-Eisen-basiertes Braun, Titan-Cobalt-basiertes Grün, Cobaltblau, Kupfer-Chrom-basiertes Schwarz und Kupfer-Eisen-basiertes Schwarz oder Chrom-basierte Pigmente wie Chromgelb, Phthalocyanin-abgeleitete Farbstoffe wie Kupfer-Phthalocyanin Blau und Kupfer-Phthalocyanin Grün, kondensierte polycyclische Farbstoffe und Pigmente wie Azo-basierte (z.B. Nickel-Azogelb), Schwefel-Indigo-Farbstoffe, Perinon-basierte, Perylen-basierte, Chinacridon-abgeleitete, Dioxazin-basierte, Isoindolinon-basierte und Chinophthalon-abgeleitete Derivate, Anthrachinon-basierte, heterocyclische Systeme, jedenfalls keine Perlglanzpigmente und/oder Interferenzpigmente aus der Gruppe der Metalloxid-beschichteten Glimmer.

Konkrete Beispiele für Handelsprodukte sind z.B. MACROLEX® Blau RR, MACROLEX® Violett 3R, MACROLEX® EG, MACROLEX® Violett B (Lanxess AG, Deutschland), Sumiplast® Violett RR, Sumiplast® Violett B, Sumiplast® Blau OR, (Sumitomo Chemical Co., Ltd.), Diaresin® Violett D, Diaresin® Blau G, Diaresin® Blau N (Mitsubishi Chemical Corporation), Heliogen® Blau oder Heliogen® Grün (BASF AG, Deutschland).

Von diesen sind Cyaninderivate, Chinolinderivate, Anthrachinonderivate, Phthalocyaninderivate bevorzugt.

Als Ruße kommen vorzugsweise nanoskalige Ruße, weiter bevorzugt nanoskalige Farbruße, zum Einsatz. Bevorzugt besitzen diese eine mittlere Primärpartikelgröße, bestimmt durch Rasterelektronenmikroskopie, von weniger als 100 nm, bevorzugt von 10 bis 99 nm, weiter bevorzugt von 10 bis 50 nm, besonders bevorzugt von 10 bis 30 nm, insbesondere von 10 bis 20 nm. Die feinteiligen Farbruße sind besonders bevorzugt.

Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS®, als nass-verarbeitete Pellets unter den Namen ELFTEX®, REGAL® und CSX®, und in einer flockigen Erscheinungsform unter MONARCH®, ELFTEX®, REGAL® und MOGUL® - erhältlich, alle von Cabot Corporation. Insbesondere bevorzugt sind Ruße, die unter dem Handelsnamen BLACK PEARLS® (CAS-Nr. 1333-86-4) gehandelt werden.

Optional enthält die Zusammensetzung einen Ultraviolett-Absorber. Geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in EP 0 839 623 A1, WO 1996/15102 A2 und EP 0 500 496 A1 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Folgende Ultraviolett-Absorber sind beispielsweise geeignet: Hydroxy-Benzotriazole, wie 2-(3',5'-Bis-(1,1-dimethylbenzyl)-2'-hydroxy-phenyl)-benzotriazol (Tinuvin® 234, BASF AG. Ludwigshafen), 2-(2'-Hydroxy-5'-(tert.-octyl)-phenyl)-benzotriazol (Tinuvin® 329, BASF AG. Ludwigshafen), 2-(2'-Hydroxy-3'-(2-butyl)-5'-(tert.butyl)-phenyl)-benzotriazol (Tinuvin® 350, BASF AG. Ludwigshafen), Bis-(3-(2H-benztriazolyl)-2-hydroxy-5-tert.-octyl)methan, (Tinuvin® 360, BASF AG. Ludwigshafen), (2-(4,6-Diphenyl-1,3,5-triazin-2-yl)-5-(hexyloxy)-phenol (Tinuvin® 1577, BASF AG. Ludwigshafen), die Benzophenone 2,4-Dihydroxy-benzophenon (Chimasorb® 22 , BASF AG. Ludwigshafen) oder 2-Hydroxy-4-(octyloxy)-benzophenon (Chimassorb® 81, BASF AG. Ludwigshafen), 2-Cyano-3,3-diphenyl-2-propensäure, 2,2-Bis[[(2-cyano-1-oxo-3,3-diphenyl-2-propenyl)oxy]-methyl]-1,3-propandiylester (9CI) (Uvinul® 3030, BASF AG Ludwigshafen), 2-[2-Hydroxy-4-(2-ethylhexyl)oxy]phenyl-4,6-di(4-phenyl)phenyl-1,3,5-triazin (CGX UVA 006, BASF AG. Ludwigshafen) oder Tetraethyl-2,2'-(1,4-phenylen-dimethyliden)-bismalonat (Hostavin® B-Cap, Clariant AG). Es können auch Mischungen dieser Ultraviolett-Absorber eingesetzt werden.

Geeignete IR-Absorber sind beispielsweise in EP 1 559 743 A1, EP 1 865 027 A1, DE 10 022 037 A1 und DE 10 006 208 A1 offenbart. Von den in der zitierten Literatur genannten IR-Absorbern sind solche auf Borid- und Wolframatbasis, insbesondere Cäsiumwolframat oder Zink-dotiertes Cäsiumwolframat, sowie auf ITO und ATO basierende Absorber sowie Kombinationen daraus bevorzugt.

Als Schlagzähmodifikatoren können übliche Schlagzähmodifikatoren enthalten sein. Diese Gruppe umfasst sowohl Kern/Schale-basierte Systeme wie ABS, MBS, Acryl-basierte, Silikon-Acryl-basierte Schlagzähmodifikatoren, aber auch nicht Kern-Schale-basierte Schlagzähmodifikatoren.

Der Polycarbonat-Zusammensetzung können organische und anorganische Füllstoffe in üblichen Mengen zugesetzt werden. In Frage kommen hierfür prinzipiell alle feinvermahlenen organischen und anorganischen Materialien. Diese können z.B. partikel-, schuppenförmigen oder faserförmigen Charakter haben. Beispielhaft seien an dieser Stelle Kreide, Quarzpulver, Titandioxid, Silikate/Aluminosilikate wie z.B. Talk, Wollastonit, Montmorillonit, insbesondere auch in einer durch Ionenaustausch modifizierten, organophilen Form, Kaolin, Zeolithe, Vermiculit sowie Aluminiumoxid, Silica, Magnesiumhydroxid und Aluminiumhydroxid genannt. Es können auch Mischungen verschiedener anorganischer Materialien zum Einsatz kommen.

Bevorzugte anorganische Füllstoffe sind feinstteilige (nanoskalige) anorganische Verbindungen aus einem oder mehreren Metallen der 1. bis 5. Hauptgruppe und 1. bis 8. Nebengruppe des Periodensystems, bevorzugt aus der 2. bis 5. Hauptgruppe, besonders bevorzugt auf der 3. bis 5. Hauptgruppe, bzw. auf der 4. bis 8. Nebengruppe, mit den Elementen Sauerstoff, Schwefel, Bor, Phosphor, Kohlenstoff, Stickstoff, Wasserstoff und/oder Silicium.

Bevorzugte Verbindungen sind beispielsweise Oxide, Hydroxide, wasserhaltige/basische Oxide, Sulfate, Sulfite, Sulfide, Carbonate, Carbide, Nitrate, Nitrite, Nitride, Borate, Silikate, Phosphate und/oder Hydride.

Als Antitropfmittel wird bevorzugt Polytetrafluoroethylen (PTFE) verwendet.

Erfindungsgemäß besonders bevorzugte Zusammensetzungen sind solche, enthaltend
A) 90,0 Gew.-% bis 97,5 Gew.-%, bevorzugt 93,0 Gew.-% bis 97,5 Gew.-%, aromatisches Polycarbonat, bevorzugt mit einer MVR von 5 bis 20 cm³/(10 min), bestimmt nach ISO 1133:2012-03 bei einer Prüftemperatur von 300 °C und 1,2 kg Belastung,
B) 1,0 bis 2,5 Gew.-%, bevorzugt 1,2 bis 2,0 Gew.-% Perlglanzpigment und/oder Interferenzpigment aus der Gruppe der mit Titandioxid beschichteten Glimmer, besonders bevorzugt umfassend mindestens 98 Gew.-% Anatas-beschichteten Glimmer,
C) 0,1 Gew.-% bis 2,0 Gew.-% Anhydrid-modifiziertes α-Olefin-Polymer, bevorzugt auf Basis von Ethen, Propen und/oder 1-Octen, besonders bevorzugt Maleinsäureanhydrid-modifiziert,
D) 0,001 Gew.-% bis 0,500 Gew.-%, bevorzugt 0,05 bis 0,270 Gew.-%, eines oder mehrerer Phosphor-haltiger Thermostabilisatoren, bevorzugt umfassend
   i) Phosphin, Phosphit und phenolisches Antioxidans oder
   ii) Phosphin, Phosphonit und phenolisches Antioxidans,
E) bis zu 7 Gew.-%, bevorzugt bis zu 5 Gew.-%, besonders bevorzugt 0,1 bis 3 Gew.-%, ganz besonders bevorzugt bis zu 1 Gew.-% weitere Additive, äußerst bevorzugt ausgewählt aus der Gruppe, bestehend aus Flammschutzmitteln, Antitropfmitteln, Schlagzähmodifikatoren, Füllstoffen, Antistatika, Farbmitteln, von Komponente B verschiedenen Pigmenten, auch umfassend Ruß, von Komponente D verschiedenen Thermostabilisatoren, Gleit- und/oder Entformungsmitteln, Hydrolysestabilisatoren, Verträglichkeitsvermittlern, UV-Absorbern und/oder IR-Absorbern.

"Bis zu" umfasst erfindungsgemäß jeweils den sich diesen Worten anschließenden Wert als Obergrenze.

Dabei besteht die Gruppe der weiteren Additive gemäß Komponente E ganz besonders bevorzugt nur aus Farbmitteln, Entformungsmitteln, von Komponente B verschiedenen Pigmenten, insbesondere Ruß, und/oder von Komponente D verschiedenen Thermostabilisatoren.

Erfindungsgemäß ganz besonders bevorzugte Zusammensetzungen enthalten
A) 90,0 Gew.-% bis 97,5 Gew.-% aromatisches Polycarbonat, bevorzugt mit einer MVR von 5 bis 12 cm³/(10 min), bestimmt nach ISO 1133:2012-03 bei einer Prüftemperatur von 300 °C und 1,2 kg Belastung,
B) 1,2 bis 2,0 Gew.-%, bevorzugt 1,5 bis 2,0 Gew.-% Perlglanz- und/oder Interferenzpigment aus der Gruppe der mit Titandioxid beschichteten Glimmer, äußerst bevorzugt umfassend mindestens 98 Gew.-% Anatas-beschichteten Glimmer,
C) 0,2 Gew.-% bis ≤ 1 Gew.-% Anhydrid-modifiziertes α-Olefin-Polymer auf Basis von Ethen, Propen und 1-Octen, besonders bevorzugt Maleinsäureanhydrid-modifiziert, äußerst bevorzugt mit einem M_{w} von 3000 g/mol bis 6000 g/mol, bestimmt mittels Gelpermeationschromatographie in ortho-Dichlorbenzol bei 150 °C mit Polystyrolkalibrierung,
D) 0,05 Gew.-% bis 0,270 Gew.-%, äußerst bevorzugt 0,15 Gew.-% bis 0,25 Gew.-%, eines oder mehrerer Phosphor-haltiger Thermostabilisatoren, umfassend, äußerst bevorzugt bestehend aus
   i) Phosphin, Phosphit und phenolisches Antioxidans oder
   ii) Phosphin, Phosphonit und phenolisches Antioxidans
E) bis zu 7 Gew.-%, bevorzugt bis zu 3 Gew.-%, äußerst bevorzugt bis zu 1 Gew.-%, weiteren Additiven, äußerst bevorzugt ausgewählt aus der Gruppe, bestehend aus Farbmitteln, Gleitmitteln, Entformungsmitteln, von Komponente B verschiedenen Pigmenten, insbesondere Ruß, und/oder von Komponente D verschiedenen Thermostabilisatoren.

Äußerst bevorzugt enthalten die Zusammensetzungen enthalten keine weiteren Komponenten.

Die Herstellung der erfindungsgemäßen Polymer-Zusammensetzungen, enthaltend die oben genannten Komponenten, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den erfindungsgemäßen Zusätzen verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten und vorgenannten Additive der erfindungsgemäßen Zusammensetzungen durch bekannte Verfahren oder als Masterbatch eingebracht werden.

Die Verwendung von Masterbatchen ist insbesondere zum Einbringen der Additive bevorzugt, wobei insbesondere Masterbatche auf Basis der jeweiligen Polymermatrix verwendet werden.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Herstellung der Kunststoffformteile aus den erfindungsgemäßen Zusammensetzungen kann vorzugsweise durch Spritzguss, Extrusion oder Rapid-Heatcycle Moulding erfolgen.

Die erfindungsgemäßen Zusammensetzungen werden bevorzugt für die Herstellung von Spritzgussteilen, insbesondere dünnwandigen, mit Perlglanzoptik verwendet. Ebenso bevorzugt werden die erfindungsgemäßen Zusammensetzungen für die Herstellung von Extrudaten verwendet. Spritzugussteile und Extrudate werden erfindungsgemäß verstanden als "Formteile".

"Dünnwandig" im Sinne der vorliegenden Erfindung sind solche Formteile, bei denen Wandstärken an den dünnsten Stellen von weniger als etwa 3 mm, bevorzugt weniger als 3 mm, weiter bevorzugt von weniger als 2,5 mm, noch weiter bevorzugt von weniger als 1,5 mm, besonders bevorzugt von weniger als 0,5 mm vorliegen. "Etwa" bedeutet hierbei, dass der tatsächliche Wert nicht wesentlich vom genannten Wert abweicht, wobei eine Abweichung von nicht größer als 25%, bevorzugt nicht größer als 10%, als "nicht wesentlich" gilt. Gegenstand der Erfindung sind daher auch entsprechende Formteile, enthaltend bzw. bestehend aus diesen Zusammensetzungen, zusammengefasst als "Formteile aus diesen Zusammensetzungen".

Diese Kunststoffformteile, bestehend aus bzw. umfassend die erfindungsgemäßen Zusammensetzungen, sind ebenfalls Gegenstand der vorliegenden Erfindung.

### Beispiele

**A:** Makrolon® 3108-Pulver der Covestro Deutschland AG. Lineares Polycarbonat auf Basis von Bisphenol A mit einer Schmelze-Volumenfließrate MVR von 6 cm³/(10 min) (gemäß ISO 1133:2012-03, bei einer Prüftemperatur 300°C und 1,2 kg Belastung).
**B:** Perlglanzpigment. Anatas-beschichteter Glimmer Mearlin® Magnapearl® 3000 der Firma BASF.
**C:** Maleinsäureanhydrid-modifiziertes Ethylen-Propylen-Octen-Terpolymer (Ethylen:Propylen:1-Octen 70:8:22), CAS-Nr. 31069-12-2, mit Molekulargewicht (Gelpermeationschromatographie in ortho-Dichlorbenzol bei 150 °C mit Polystyrolkalibrierung) M_{w} = 4900 g/mol, Mₙ = 1159 g/mol, Dichte 940 kg/m³, Säurezahl 53 mg KOH/g, Maleinsäureanhydridanteil 4,5 Gew.-%, bezogen auf das Gesamtgewicht an Komponente C. Die angegebenen Größen (Mₙ analog M_{w}) wurden wie im allgemeinen Beschreibungsteil beschrieben bestimmt.
**D-1:** ADK STAB® PEP-36, Bis(2,6-di-t-butyl-4-methylphenyl)pentaerythritoldiphosphit, erhältlich bei der Firma Adeka Palmarole.
**D-2:** Hostanox PEPQ. Stabilisator-Mischung, enthaltend als Hauptkomponente Tetrakis(2,4-di-tert-butylphenyl)-4,4'-biphenyldiphosphonit, erhältlich bei der Firma Clariant.
**D-3:** Irganox® 1076, n-Octadecyl-3-(3,5-di-t.butyl-4-hydroxyphenyl)-propionat, erhältlich bei der Firma BASF SE.
**D-4:** Irganox® B900, Mischung aus vier Teilen Irgafos® 168 und einem Teil Irganox® 1076. Irgafos® 168: Tris(2,4-tert-butylphenyl)phosphit, erhältlich bei der Firma BASF SE.
**D-5:** Triphenylphosphin, erhältlich bei der Firma BASF SE.
**E-1:** Pentaerythrittetrastearat; Loxiol VPG 861 von Emery Oleochemicals.
**E-2:** Mischung aus üblichen Farbmitteln und Ruß.

Die in den folgenden Beispielen beschriebenen Polycarbonatzusammensetzungen wurden auf einem Extruder Evolum EV32 der Firma Clextral mit einem Durchsatz von 50 kg/h durch Compoundierung hergestellt. Die Schmelzetemperatur betrug 300°C.

Die Bestimmung des **Schmelze-Volumenfließrate** (MVR) erfolgte nach ISO 1133:2012-03 (bei einer Prüftemperatur von 300 °C, Masse 1,2 kg) mit dem Gerät Zwick 4106 der Firma Zwick Roell.

**Tabelle 1: Zusammensetzungen und MVR**

| | **1V** | **2V** | **3V** | **4V** | **5V** | **7E** | **8E** | **9E** | **10V** | **11V** | **12E** | **13E** | **14V** | **15V** |
|---|---|---|---|---|---|---|---|---|---|---|---|---|---|---|
| | **[Gew.-%]** | **[Gew.-%]** | **[Gew.-%]** | **[Gew.-%]** | **[Gew.-%]** | **[Gew.-%]** | **[Gew.-%]** | **[Gew.-%]** | **[Gew.-%]** | **[Gew.-%]** | **[Gew.-%]** | **[Gew.-%]** | **[Gew.-%]** | **[Gew.-%]** |
| **A** | 97,48 | 97,38 | 97,28 | 97,38 | 97,28 | 97,28 | 97,38 | 97,28 | 97,38 | 97,28 | 97,38 | 97,28 | 97,48 | 97,48 |
| | 1,94 | 1,94 | 1,94 | 1,94 | 1,94 | 1,94 | 1,94 | 1,94 | 1,94 | 1,94 | 1,94 | 1,94 | 1,94 | 1,94 |
| **C** | | | | | | 0,4 | 0,4 | 0,4 | | | 0,4 | 0,4 | | |
| **D-1** | | 0,08 | 0,16 | | | 0,16 | | | | | | | | |
| **D-2** | | | | 0,08 | 0,16 | | 0,08 | 0,16 | | | | | | |
| **D-3** | | 0,02 | 0,04 | 0,02 | 0,04 | 0,024 | 0,02 | 0,04 | | | | | | |
| **D-4** | | | | | | | | | 0,1 | 0,2 | 0,1 | 0,2 | | |
| **D-5** | 0,05 | 0,05 | 0,05 | 0,05 | 0,05 | 0,05 | 0,05 | 0,05 | 0,05 | 0,05 | 0,05 | 0,05 | 0,05 | 0,05 |
| **E-1** | 0,4 | 0,4 | 0,4 | 0,4 | 0,4 | | | | 0,4 | 0,4 | | | 0,4 | 0,4 |
| **E-2** | 0,13 | 0,13 | 0,13 | 0,13 | 0,13 | 0,13 | 0,13 | 0,13 | 0,13 | 0,13 | 0,13 | 0,13 | 0,13 | 0,13 |
| **MVR** [cm³/(10 min)] | 12,74 | 11,57 | 9,72 | 12,64 | 12,09 | 7,92 | 7,65 | 7,93 | 12,57 | 14,21 | 7,57 | 7,51 | 11,78 | 17,83 |

## Patentansprüche

1. Zusammensetzung, enthaltend
A) 50 Gew.-% bis 98,5 Gew.-% aromatisches Polycarbonat und
B) 0,8 Gew.-% bis ≤ 3,0 Gew.-% Interferenzpigment und/oder Perlglanzpigment aus der Gruppe der Metalloxid-beschichteten Glimmer,
**dadurch gekennzeichnet, dass** die Zusammensetzung außerdem
C) 0,05 Gew.-% bis ≤ 3 Gew.-% Anhydrid-modifiziertes α-Olefin-Polymer enthält.

2. Zusammensetzung nach Anspruch 1, enthaltend
A) 90,0 Gew.-% bis 97,5 Gew.-% aromatisches Polycarbonat,
B) 1,0 bis 2,5 Gew.-% Interferenzpigment und/oder Perlglanzpigment aus der Gruppe der Metalloxid-beschichteten Glimmer,
C) 0,2 Gew.-% bis ≤ 1 Gew.-% Anhydrid-modifiziertes α-Olefin-Polymer.

3. Zusammensetzung nach Anspruch 1 oder 2, enthaltend 1,2 bis 2,0 Gew.-% Interferenzpigment und/oder Perlglanzpigment aus der Gruppe der Metalloxid-beschichteten Glimmer.

4. Zusammensetzung nach einem der vorhergehenden Ansprüche, wobei die Zusammensetzung
D) 0,001 Gew.-% bis 0,500 Gew.-% eines oder mehrerer Phosphor-haltiger Thermostabilisatoren enthält.

5. Zusammensetzung nach Anspruch 4, wobei Komponente D ein oder mehrere Phosphite als Thermostabilisator umfasst.

6. Zusammensetzung nach Anspruch 4, wobei Komponente D
i) Phosphin, Phosphit und phenolisches Antioxidans oder
ii) Phosphin, Phosphonit und phenolisches Antioxidans
als Phosphor-haltige Thermostabilisatoren umfasst.

7. Zusammensetzung nach einem der vorhergehenden Ansprüche, wobei als Thermostabilisator Bis(2,6-di-t-butyl-4-methylphenyl)pentaerythritoldiphosphit enthalten ist.

8. Zusammensetzung nach einem der vorhergehenden Ansprüche, wobei das Anhydrid-modifizierte α-Olefin-Polymer mit Maleinsäureanhydrid modifiziert ist und auf Ethen, Propen und/oder 1-Octen basiert.

9. Zusammensetzung nach einem der vorhergehenden Ansprüche, wobei der olefinische Teil des Anhydrid-modifizierten α-Olefin-Polymers
einen Ethylen-Anteil von 65,0-96,0 Gew.-%,
einen Propylen-Anteil von 2,0-10,0 Gew.-% und
einen 1-Octen-Anteil von 2,0-25,0 Gew.-% aufweist.

10. Zusammensetzung nach einem der vorhergehenden Ansprüche, wobei das Anhydrid-modifizierte α-Olefin-Polymer ein mittleres Molekulargewicht M_{w}, bestimmt mittels Gelpermeationschromatographie in ortho-Dichlorbenzol bei 150 °C mit Polystyrolkalibrierung, von 1000 bis 15.000 g/mol und eine Säurezahl von 45 bis 170 mg KOH/g, bestimmt gemäß DIN ISO 17025 mittels potentiometrischer Titration, aufweist.

11. Zusammensetzung nach einem der vorhergehenden Ansprüche, wobei als Perlglanz- und/oder Interferenzpigment aus der Gruppe der Metalloxid-beschichteten Glimmer Anatas- oder Rutilbeschichteter Glimmer enthalten ist.

12. Zusammensetzung nach einem der vorhergehenden Ansprüche, wobei die Zusammensetzung
A) 90,0 Gew.-% bis 97,5 Gew.-% aromatisches Polycarbonat,
B) 1,2 Gew.-% bis 2,0 Gew.-% Perlglanz- und/oder Interferenzpigment aus der Gruppe der mit Titandioxid beschichteten Glimmer,
C) 0,2 Gew.-% bis ≤ 1 Gew.-% Anhydrid-modifiziertes α-Olefin-Polymer auf Basis von Ethen, Propen und/oder 1-Octen,
D) 0,05 bis 0,270 Gew.-% Phosphor-haltigen Thermostabilisator, umfassend
i) Phosphin, Phosphit und phenolisches Antioxidans oder
ii) Phosphin, Phosphonit und phenolisches Antioxidans,
E) bis zu 7 Gew.-% weitere Additive, ausgewählt aus der Gruppe, bestehend aus Flammschutzmitteln, Antitropfmitteln, von Komponente D) verschiedenen Thermostabilisatoren, Schlagzähmodifikatoren, Füllstoffen, Antistatika, Farbmitteln, von Komponente B verschiedenen Pigmenten, auch umfassend Ruß, Gleitmitteln, Entformungsmitteln, Hydrolysestabilisatoren, Verträglichkeitsvermittlern, UV-Absorbern und/oder IR-Absorbern,
enthält.

13. Zusammensetzung nach Anspruch 12, wobei die Zusammensetzung keine weiteren Komponenten enthält.

14. Zusammensetzung nach Anspruch 12 oder 13, wobei als weitere Additive gemäß Komponente E nur ggf. Farbmittel, Entformungsmittel, von Komponente D verschiedene Thermostabilisatoren und/oder von Komponente B verschiedene Pigmente enthalten sind.

15. Formteil, hergestellt aus einer Zusammensetzung nach einem der Ansprüche 1 bis 14.

## Claims

1. Composition comprising
A) 50 wt% to 98.5 wt% of aromatic polycarbonate, and
B) 0.8 wt% to ≤ 3.0 wt% of interference pigment and/or pearlescent pigment from the group of the metal oxide-coated micas,
**characterized in that** the composition also comprises
C) 0.05 wt% to ≤ 3 wt% of anhydride-modified α-olefin polymer.

2. Composition according to Claim 1, comprising
A) 90.0 wt% to 97.5 wt% of aromatic polycarbonate,
B) 1.0 to 2.5 wt% of interference pigment and/or pearlescent pigment from the group of the metal oxide-coated micas,
C) 0.2 wt% to ≤ 1 wt% of anhydride-modified α-olefin polymer.

3. Composition according to Claim 1 or 2, comprising 1.2 to 2.0 wt% of interference pigment and/or pearlescent pigment from the group of the metal oxide-coated micas.

4. Composition according to any of the preceding claims, wherein the composition comprises
D) 0.001 wt% to 0.500 wt% of one or more phosphorus-containing thermal stabilizers.

5. Composition according to Claim 4, wherein component D comprises one or more phosphites as thermal stabilizer.

6. Composition according to Claim 4, wherein component D comprises
i) phosphine, phosphite and phenolic antioxidant or
ii) phosphine, phosphonite and phenolic antioxidant
as phosphorus-containing thermal stabilizers.

7. Composition according to any of the preceding claims, wherein the thermal stabilizer present is bis(2,6-di-t-butyl-4-methylphenyl)pentaerythritol diphosphite.

8. Composition according to any of the preceding claims, wherein the anhydride-modified α-olefin polymer has been modified with maleic anhydride and is based on ethene, propene and/or 1-octene.

9. Composition according to any of the preceding claims, wherein the olefinic portion of the anhydride-modified α-olefin polymer has
an ethylene content of 65.0-96.0 wt%,
a propylene content of 2.0-10.0 wt% and
a 1-octene content of 2.0-25.0 wt%.

10. Composition according to any of the preceding claims, wherein the anhydride-modified α-olefin polymer has an average molecular weight M_{w}, determined by means of gel permeation chromatography in ortho-dichlorobenzene at 150°C with polystyrene calibration, of 1000 to 15 000 g/mol and an acid number of 45 to 170 mg KOH/g, determined according to DIN ISO 17025, by means of potentiometric titration.

11. Composition according to any of the preceding claims, wherein the pearlescent pigment and/or interference pigment from the group of the metal oxide-coated micas present is anatase- or rutilecoated mica.

12. Composition according to any of the preceding claims, wherein the composition comprises
A) 90.0 wt% to 97.5 wt% of aromatic polycarbonate,
B) 1.2 wt% to 2.0 wt% of pearlescent pigment and/or interference pigment from the group of the titanium dioxide-coated micas,
C) 0.2 wt% to ≤ 1 wt% of anhydride-modified α-olefin polymer based on ethene, propene and/or 1-octene,
D) 0.05 to 0.270 wt% of phosphorus-containing thermal stabilizer comprising
i) phosphine, phosphite and phenolic antioxidant or
ii) phosphine, phosphonite and phenolic antioxidant,
E) up to 7 wt% of further additives selected from the group consisting of flame retardants, antidripping agents, thermal stabilizers other than component D), impact modifiers, fillers, antistats, colourants, pigments other than component B, also including carbon black, lubricants, demoulding agents, hydrolysis stabilizers, compatibilizers, UV absorbers and/or IR absorbers.

13. Composition according to Claim 12, wherein the composition does not comprise any further components.

14. Composition according to Claim 12 or 13, wherein further additives optionally present according to component E are solely colourants, demoulding agents, thermal stabilizers other than component D and/or pigments other than component B.

15. Moulding produced from a composition according to any of Claims 1 to 14.

## Revendications

1. Composition, contenant
A) 50 % en poids à 98,5 % en poids de polycarbonate aromatique et
B) 0,8 % en poids à ≤ 3,0 % en poids de pigment interférentiel et/ou de pigment nacré du groupe des micas revêtus par un oxyde métallique, **caractérisée en ce que** la composition contient en outre
C) 0,05 % en poids à ≤ 3 % en poids de polymère d'α-oléfine modifié par anhydride.

2. Composition selon la revendication 1, contenant
A) 90,0 % en poids à 97,5 % en poids de polycarbonate aromatique,
B) 1,0 % à 2,5 % en poids de pigment interférentiel et/ou de pigment nacré du groupe des micas revêtus par un oxyde métallique,
C) 0,2 % en poids à ≤ 1 % en poids de polymère d'α-oléfine modifié par anhydride.

3. Composition selon la revendication 1 ou 2, contenant 1,2 à 2,0 % en poids de pigment interférentiel et/ou de pigment nacré du groupe des micas revêtus par un oxyde métallique.

4. Composition selon l'une quelconque des revendications précédentes, la composition contenant
D) 0,001 % en poids à 0,500 % en poids d'un ou plusieurs stabilisants thermiques contenant du phosphore.

5. Composition selon la revendication 4, le composant D comprenant un ou plusieurs phosphites en tant que stabilisant thermique.

6. Composition selon la revendication 4, le composant D comprenant
i) une phosphine, un phosphite et un antioxydant phénolique ou
ii) une phosphine, un phosphonite et un antioxydant phénolique
en tant que stabilisants thermiques contenant du phosphore.

7. Composition selon l'une quelconque des revendications précédentes, du bis (2,6-di-t-butyl-4-méthylphényl)pentaérythritoldiphosphite étant contenu en tant que stabilisant thermique.

8. Composition selon l'une quelconque des revendications précédentes, le polymère d'α-oléfine modifié par anhydride étant modifié par de l'anhydride maléique et étant à base d'éthylène, de propène et/ou de 1-octène.

9. Composition selon l'une quelconque des revendications précédentes, la partie oléfiniquement du polymère d'α-oléfine modifié par anhydride présentant
une proportion d'éthylène de 65,0 à 96,0 % en poids,
une proportion de propylène de 2,0 à 10,0 % en poids et
une proportion de 1-octène de 2,0 à 25,0 % en poids.

10. Composition selon l'une quelconque des revendications précédentes, le polymère d'α-oléfine modifié par anhydride présentant un poids moléculaire moyen M_{w}, déterminé au moyen de chromatographie à perméation de gel dans de l'ortho-dichlorobenzène à 150 °C avec une calibration au polystyrène, de 1000 à 15 000 g/mole et un indice d'acide de 45 à 170 mg de KOH/g, déterminé selon la norme DIN ISO 17025 au moyen d'une titration potentiométrique.

11. Composition selon l'une quelconque des revendications précédentes, un mica revêtu par de l'anatase ou par du rutile étant contenu, en tant que pigment nacré et/ou pigment interférentiel du groupe des micas revêtus par un oxyde métallique.

12. Composition selon l'une des revendications précédentes, la composition contenant
A) 90,0 % en poids à 97,5 % en poids de polycarbonate aromatique,
B) 1,2 % à 2,0 % en poids de pigment interférentiel et/ou de pigment nacré du groupe des micas revêtus par un dioxyde de titane,
C) 0,2 % en poids à ≤ 1 % en poids de polymère d'α-oléfine modifié par anhydride à base d'éthylène, de propène et/ou de 1-octène,
D) 0,05 à 0,270 % en poids de stabilisant thermique contenant du phosphore, comprenant
i) une phosphine, un phosphite et un antioxydant phénolique ou
ii) une phosphine, un phosphonite et un antioxydant phénolique,
E) jusqu'à 7 % en poids d'autres additifs, choisis dans le groupe constitué par des agents ignifugeants, des agents antigoutte, des stabilisants thermiques différents des composants D), des modificateurs de résistance aux chocs, des charges, des antistatiques, des colorants, des pigments différents du composant B, y compris les suies, des lubrifiants, des agents de démoulage, des stabilisants à l'hydrolyse, des agents de compatibilité, des absorbants UV et/ou des absorbants IR.

13. Composition selon la revendication 12, la composition ne contenant pas de composants supplémentaires.

14. Composition selon la revendication 12 ou 13, seulement, le cas échéant, un colorant, un agent de démoulage étant contenu en tant qu'additif supplémentaire selon le composant E, des stabilisants thermiques différents du composant D et/ou des pigments différents du composant B étant contenus.

15. Pièce moulée, préparée à partir d'une composition selon l'une quelconque des revendications 1 à 14.
